# DEMANDE DE BREVET EUROPEEN

(11) **EP 1 213 664 A1**
(43) Date de publication de la demande: **12.06.2002**
(21) Numéro de dépôt: 01128280.3
(22) Date de dépôt: 28.11.2001
(51) Int. Cl.: G06F 17/30

(54) **Procédé et dispositif de transformation de page informatique hypertexte**

(30) Priorité: 28.11.2000 FR 0015331
(71) Demandeur: Cornuejols, Christophe, 31450 Ayguevives (FR)
(72) Inventeur: Cornuejols, Christophe, 31450 Ayguevives (FR)

(57) **Abrégé**

Procédé pour transformer une première page informatique hypertexte représentée par une première liste d'instructions, par exemple en langage HTML, la première page comportant au moins un lien hypertexte, en une seconde page informatique représentée par une seconde liste d'instructions, par exemple en langage HTML représentant une seconde page hypertexte, comportant, sur une partie au moins de la seconde page, une image représentative d'un espace tridimensionnel, image dans laquelle au moins un lien hypertexte de la première page est disposée.

## Description

La présente invention concerne un procédé et un dispositif de transformation de page informatique hypertexte. Elle concerne plus particulièrement une transformation de premières pages d'une première arborescence de pages reliées entre elles par des liens hypertextes, en secondes pages, différentes des premières pages, d'une seconde arborescence de pages différente de la première arborescence, selon des critères de navigation plus proches de l'intuition des internautes.

Comme on le sait, dans le domaine des sites Internet, par exemple codés en langage HTML (Hyper Text Markup Language pour langage de représentation hypertexte), les pages informatiques d'un site conservées par un serveur sont couramment reliées les unes aux autres par des liens hypertextes correspondant à des zones d'un texte ou à des éléments graphiques. On accède aux pages avec un terminal informatique doté d'un logiciel de navigation (en anglais "browser"). En pratique, le fait de placer le pointeur, représentation de la position d'un moyen de pointage (par exemple une souris) sur un écran du terminal, sur la zone de lien de la page, souvent déterminée par une couleur spécifique ou un soulignement, puis de cliquer, par exemple sur un bouton de la souris, envoie une requête identifiant le lien hypertexte sélectionné au serveur, celui-ci fournissant, en retour, la description de la nouvelle page Internet associée au lien.

Le logiciel de navigation affiche la nouvelle page sur l'écran du terminal à la place de la page précédente ou dans une nouvelle fenêtre de navigateur. Ce passage d'une page à l'autre s'appelle navigation hypertexte. Un site Internet est un ensemble de pages Internet d'un même domaine et reliées entre elles par des liens hypertextes.

Il est courant que des internautes se plaignent de la difficulté à retrouver leur chemin dans un ensemble de pages hypertexte formant un site. En effet chaque page comportent usuellement un grand nombre de liens, jusqu'à quelques dizaines, pointant vers d'autres pages du même site ou d'autres sites extérieurs. On comprend que ces liens ne suivent pas une hiérarchie de pages définie, puisque par exemple, après avoir " descendu " de plusieurs niveaux de liens dans un site, l'internaute peut rencontrer un lien qui le ramène directement à une page intermédiaire ou une page d'accueil. Ce type de navigation est alors très déroutant pour les utilisateurs, et est source de comportement de lassitude ou de rejet des sites.

Ce problème est évidemment encore plus critique dans le cas de sites de commerce électronique, pour lesquels de très grands nombres d'informations sont réunis sur un même site, avec par exemple plusieurs centaines de pages d'informations correspondant à autant de produits, plus des pages génériques, des pages de commande, des détails techniques, des conditions générales de vente ou d'utilisation du site, etc. L'analyse de statistiques de visites d'un site de commerce électronique permet de constater une perte importante de visiteurs au bout de quelques " clics ", qui est au moins partiellement liée à ce problème de navigation peu naturelle et source de confusion et donc de stress de l'internaute.

Dans les sites de données et articles scientifiques, il est connu, comme par exemple exposé dans les documents :
- "Visualizing the world-wide web with the navigational view builder" (Mukherjea et al.) Computer Networks and ISDN systems, North Holland Publishing, volume 27, numéro 6, page 1075-1087, Amsterdam, NL,
- "Clustering" of XML documents - from information to knowledge using astronomical databases workshop", (D. Guillaume et al.) Strasbourg, FR, volume 127, numéro 2-3, pages 215-227, computer physics communications, Elsevier NL,
- "visualising and populating the web : collaborative virtual environments for browsing, searching and inhabiting webspace" (Bendford) Computer networks and ISDN systems, North Holland Publishing, Volume 29, numéro 15, Amsterdam, NL,
de constituer une représentation en trois dimensions de l'arborescence des pages du web, chaque page étant représentée par une sphère ou un cube et les liens étant représentés par des lignes entre les symboles des pages. Cette représentation ne permet pas une navigation entre les pages puisque leurs contenu n'est pas présenté et qu'on ne peut passer d'une page à l'autre. De plus, une telle représentation abstraite, dans l'espace, est encore moins intuitive que celle des sites commerciaux puisqu'elle ajoute un niveau d'abstraction supplémentaire et ne permet pas d'appréhender le contenu des pages représentées dans l'arborescence.

La présente invention vise un moyen de résoudre en partie ce problème de difficulté de navigation dans un univers de liens textuels reliant des pages hypertexte.

Selon un premier aspect, la présente invention vise un procédé de transformation d'une description d'une première page informatique hypertexte représentée par une première liste d'instructions, par exemple en langage HTML, la première page comportant au moins un lien hypertexte, en une seconde page informatique représentée par une seconde liste d'instructions, par exemple en langage HTML représentant une seconde page hypertexte, caractérisé en ce qu'il comporte une étape de constitution d'une image en trois dimensions, dont au moins une partie comporte un lien hypertexte de la première page.

Grâce à ces dispositions, au moins une pages d'un site est remplacée par une page dans laquelle le visiteur se repère naturellement en visualisant un espace en trois dimensions qui représente intuitivement des directions de déplacement vers lesquels le visiteur peut se déplacer.

On comprend que de cette façon, il est possible de surmonter la désorientation des internautes, justement en faisant appel au sens de l'orientation spatial, qui est une des zones du cerveau les plus anciennes et les mieux développées. En remplaçant une page de texte contenant de façon apparemment aléatoire des zones de lien, par une page fonctionnellement identique comportant au moins en partie une image tridimensionnelle dont les liens sont attachés à des zones de l'image, on provoque l'association inconsciente par l'internaute de ces zones à des éléments spatiaux.

Le passage d'une page de cette forme à une autre par activation de liens correspondant à des zones des images forme alors naturellement un chemin spatial dans l'esprit de l'utilisateur. La navigation dans le site est alors largement facilitée et devient plus naturelle.

L'utilisateur de la seconde page informatique se retrouve dans un univers visuel, l'image en trois dimensions, dans lequel les liens sont intuitivement organisés par les éléments graphiques qui les représente et que l'image en trois dimensions comporte.

Selon des caractéristiques complémentaires, le procédé comporte une étape de hiérarchisation des liens de la première page informatique, chaque niveau hiérarchique de lien étant associé à au moins un élément graphique dans une hiérarchie d'éléments graphiques.

Grâce à ces dispositions, le visiteur se trouve devant des liens dont il peut visuellement apprécier l'importance.

Selon d'autres caractéristiques complémentaires, les éléments graphiques de la hiérarchie d'éléments graphiques possèdent des dimensions physiques en décroissantes.

Selon d'autres caractéristiques complémentaires, l'étape de hiérarchisation comporte une étape de traitement de liens de pages d'un site dont fait partie ladite première page.

Selon d'autres caractéristiques complémentaires, le procédé comporte une étape de création de sous-ensembles de pages Internet de manière à ce que les nombres de liens entre ces groupes *G1, G2, ..., Gp* de pages connexes soient minimisés.

Selon d'autres caractéristiques complémentaires, l'étape de hiérarchisation comporte une étape d'association à chaque groupe *G1, G2, ..., Gp*, (puis par exemple au sein de *Gi* les sous groupes *Gi'1, Gi'2,...Gi'pi,* etc.) d'un élément graphique comportant *pi* zones de liens à créer vers les *pi* sous groupes de connexité de *Gi*, et vers les groupes de même niveau auxquels le groupe *Gi* est relié.

Selon d'autres caractéristiques complémentaires, le procédé comporte une étape d'exclusion de liens préliminaire à ladite hiérarchisation.

Selon d'autres caractéristiques complémentaires, l'étape de hiérarchisation comporte une étape d'analyse de flux de visiteurs.

Selon d'autres caractéristiques complémentaires, l'étape de constitution d'une image en trois dimensions comporte une étape d'ajout, dans l'image en trois dimensions, d'au moins un lien absent de la première page informatique.

Selon d'autres caractéristiques complémentaires, l'étape de constitution d'une image en trois dimensions comporte une étape de mise en relation des éléments graphiques en fonction des relations entre les liens qu'ils représentent.

Grâce à chacune de ces dispositions, l'image en trois dimensions représente une information riche et visuellement accessible sur l'organisation et l'utilisation du site visité.

Selon un second aspect de l'invention, celle ci propose un procédé de création de page de type HTML à partir d'une définition de ladite page sous forme de liste de liens et de contenu, ledit procédé comportant une étape de création d'une image spatiale, en trois dimensions, des zones de ladite image en trois dimensions étant associées à au moins un lien, et une image de la scène en deux dimensions étant prise de manière à servir d'interface de navigation à un utilisateur.

Selon un mode de réalisation avantageux, le procédé utilise une technique de minimisation de liens entre groupes logiques du type utilisé dans les dispositifs d'émulation de circuits logiques.

Selon un autre mode de mise en oeuvre, le procédé utilise un algorithme de classification automatique des pages hypertexte selon des dimensions comportant la plus grande quantité d'information relatives aux liens entre ces pages.

L'invention vise plus généralement un ordinateur, ou un autre appareil programmable caractérisés en ce que ces dispositifs comportent un dispositif ou sont adaptés à mettre en oeuvre un procédé tel qu'exposés brièvement ci-dessus.

L'invention vise également un moyen de stockage d'informations et un moyen de stockage d'informations amovible, partiellement ou totalement, lisibles par un ordinateur ou un microprocesseur conservant des instructions d'un programme informatique, permettant la mise en oeuvre du procédé exposé succinctement ci-dessus

L'invention vise aussi un dispositif de transformation d'une description d'une première page informatique hypertexte représentée par une première liste d'instructions, par exemple en langage HTML, la première page comportant au moins un lien hypertexte, en une seconde page informatique représentée par une seconde liste d'instructions, par exemple en langage HTML représentant une seconde page hypertexte, caractérisé en ce qu'il comporte un moyen de constitution d'une image en trois dimensions, dont au moins une partie comporte un lien hypertexte de la première page.

Les avantages et caractéristiques complémentaires de ce dispositif étant identiques à ceux du procédé succinctement exposé ci-dessus, ils ne sont pas rappelés ici.

La description et les dessins d'un mode préféré de réalisation de l'invention, donnés ci-après, permettront de mieux comprendre les buts et avantages de l'invention. Il est clair que cette description est donnée à titre d'exemple, et n'a pas de caractère limitatif. Dans les dessins :
- la figure 1 est une vue schématisée d'une page hypertexte contenant un ensemble de liens hypertexte ;
- la figure 2 représente une page fonctionnellement identique à la page représentée sur la figure 1, mais dont les liens sont disposés selon une relation cohérente avec une image tridimensionnelle formant arrière plan ;
- la figure 3 est un organigramme d'un procédé conforme à l'invention ;
- la figure 4 illustre une arborescence de pages hypertexte formant un site Internet ;
- la figure 5 est un organigramme d'un procédé conforme à l'invention ; et
- la figure 6 représente une page constituée par la mise en oeuvre du procédé illustré en figure 5.

Dans la suite de la description, on utilisera de façon indifférente la représentation d'une page hypertexte sous sa forme de suite d'instructions en code de type HTML ou similaire, ou sous sa forme telle que visualisée par un logiciel de navigation Internet, tels que par exemple connus sous le nom commercial Navigator (marque déposée) de la société Netscape (marque déposée), ou Internet Explorer (marque déposée) de la société Microsoft (marque déposée). Dans certains aspects de la description, il est plus aisé d'utiliser une représentation sous forme de liste d'instructions, alors qu'à d'autres moments, il est plus clair de faire appel à la représentation visuelle telle qu'elle apparaît à l'écran pour un internaute.

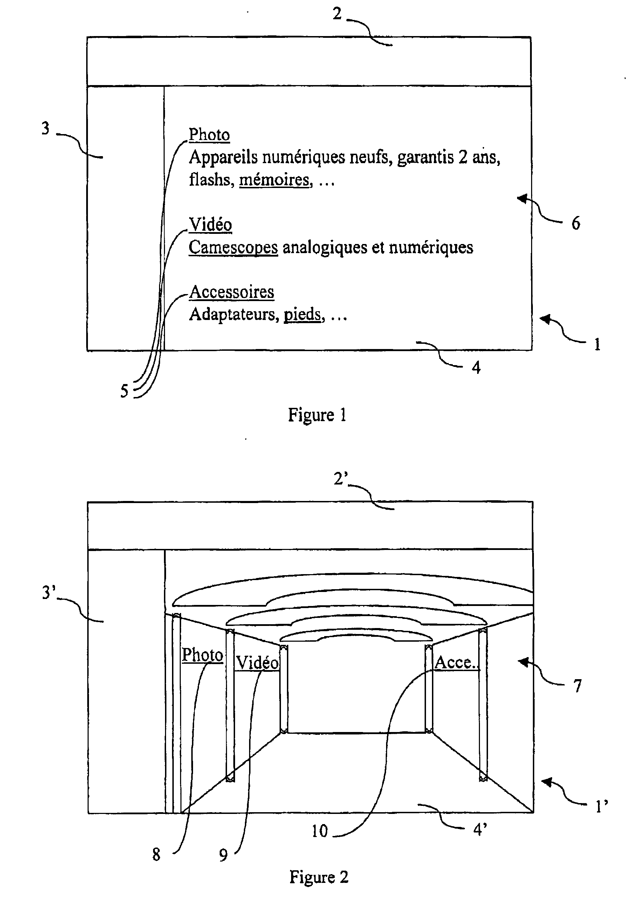

Comme on le voit sur la figure 1, une page hypertexte 1 telle que visualisée sur un écran d'ordinateur comporte usuellement un bandeau supérieur 2, un menu latéral 3 et une zone de texte 4. Le bandeau 2 et le menu latéral 3 sont souvent identiques pour un grand nombre de pages d'un même site Internet. La zone de texte 4 comporte un ensemble de liens 5 disposés au sein d'un texte 6, éventuellement agrémenté d'images 7.

Les liens 5 pointent vers un ensemble d'autres pages Internet. Dans l'exemple décrit de façon non limitative sur la figure 1 et dans la présente description, la page représentée appartient à un site de commerce électronique, et comporte des liens vers des catégories de produits, par exemple " photo ", " vidéo ", " accessoires ", etc. Ces liens sont ici disposés en liste horizontale ou verticale.

La figure 2 illustre alors de façon simplifiée une page fonctionnellement identique à celle de la figure 1. Dans cette seconde page hypertexte 1', un bandeau 2' et un menu latéral 3', identique à ceux de la page 1, sont présents en haut et en partie gauche respectivement de la page Internet 1'.

Par contre, la zone de texte 3 est remplacée ici par une zone comportant une image 7 d'un espace tridimensionnel, représentant ici une pièce sensiblement rectangulaire à colonnes. Des sous zones de l'image, correspondant visuellement à des espace " latéraux " de la pièce, figurent des panneaux 8, 9, 10 portant respectivement des inscriptions "photo", " vidéo ", " accessoires ". le fait d'amener le curseur sur une de ces zones et de cliquer provoque alors l'activation d'un lien pointant vers la même page que les liens de même nom dans la page de la figure 1.

Il est clair que de façon plus générale, l'arborescence du site Internet (c'est à dire l'ensemble des pages et des liens qui permettent de passer de l'une à l'autre) de la figure 1 est remplacée par une arborescence de type architecturale, les liens étant autant que possible attachés à des zones d'images représentatives de scènes tridimensionnelles.

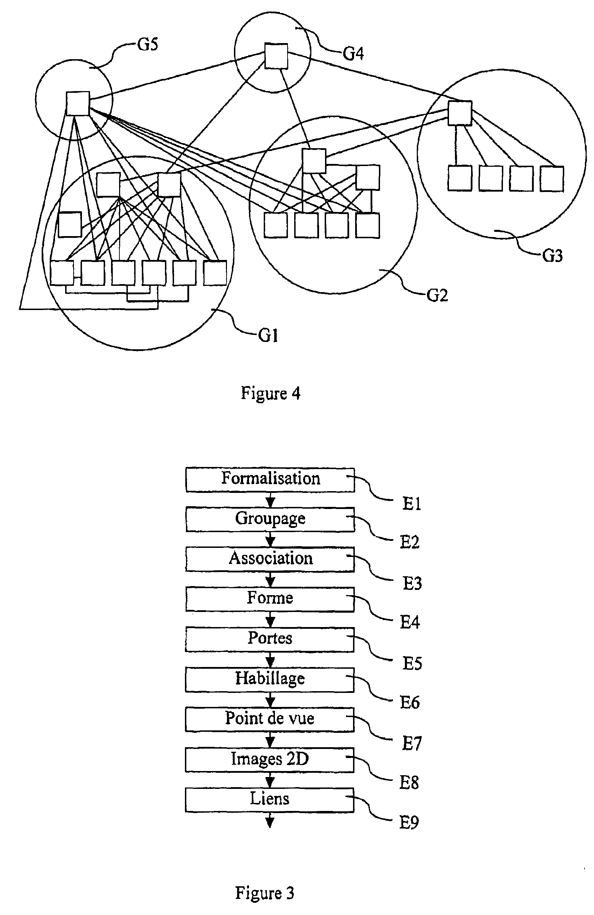

Le procédé de transformation d'une description de site Internet complet (sous forme d'un premier ensemble de page hypertexte impliquant une orientation textuelle d'un internaute utilisateur, ou sous forme d'arborescence de liens et de pages) vers un site fonctionnellement sensiblement identique adapté à une orientation spatiale de l'internaute comporte plusieurs étapes, telles que résumée sur l'organigramme de la figure 3.

Dans une première étape E1, l'arborescence du site initial est formalisée, avec la mise en évidence du nombre de liens par page et des pages " cibles " auxquelles ces liens renvoient.

Puis, dans une seconde étape E2, on créé des sous-ensembles de pages Internet de manière à ce que les nombres de liens entre ces groupes *G1, G2, ..., Gp* soient minimisés. Il est par exemple possible d'utiliser pour cela un algorithme d'analyse de connexité (proximité des pages selon une mesure de nombre de liens), et en particulier de choix de pages dites " pages germes " et de croissance progressive de ces germes par addition de pages liées à ces pages germes, en tenant compte en permanence du nombre de liens externe des groupes germes créés. Les pages germe peuvent être créées en utilisant les pages présentant les plus grand nombre de liens.

Un variante de solution de génération de groupes de pages connexes est une utilisation de groupes de pages initialement aléatoires, puis de permutations successives, en ne conservant que les permutations qui diminuent le nombre total de liens externe *Li* d'un groupe *Gi* de pages donné.

De telles techniques de minimisation des liens externes entre groupes logiques sont déjà connues dans le domaine des dispositifs d'émulation de circuits logiques, et sont par exemple décrites dans le brevet européen 0.437.491 (Quickturn 1989). On note que ces techniques permettent une génération hiérarchique de groupes *G, G', G"; G'"*, des groupes de premier niveau *G* étant définis par minimisation de leur liens externes, puis dans chaque tel groupe de premier niveau, des sous groupes de second niveau *G'* étant à leur tour définis etc. Le nombre de niveaux dans cette hiérarchie dépend dans le domaine de l'émulation de circuit de l'architecture en armoires puis tiroirs puis cartes puis circuits destinés à reproduire des groupes de fonctions logiques. Dans l'utilisation pour un site Internet, il correspond au nombre maximum de niveaux de navigation que l'on souhaite proposer à l'internaute. Il est connu que plus le nombre de niveaux de navigation augmente, et donc le nombre de " clics " demandés à l'internaute, plus celui-ci à tendance à passer à un autre site. En pratique, il est couramment admis de se limiter à quatre niveaux de navigation.

Dans le cas présent, on choisit, à chaque niveau hiérarchique de division en sous groupes de connexité maximale, de restreindre le nombre p de groupes *G1, G2, ...Gp* à sensiblement une dizaine, de manière, comme on le verra, à restreindre de manière similaire le nombre de zones de l'image de niveau hiérarchique supérieur destinées à porter un lien vers un des groupes.

Dans une autre variante, en partant d'un ensemble de N pages hypertexte, chaque page hypertexte est disposée dans un espace à N dimensions, avec pour coordonnées sur chaque dimension le nombre de liens qu'elle comporte vers chacune des autres pages (généralement 0 ou 1, mais parfois plus de 1). Puis, un algorithme de classification automatique classique, par exemple par détection des axes principaux d'inertie du nuage de points ainsi créé (inversion de la matrice ...), permet de définir les pages selon quelques axes indépendants caractérisant des quantités décroissantes d'information.

Dans le cas d'un site de commerce électronique à base de pages statiques, et comportant de façon classique une page de garde pointant vers quelques pages introductives de chaque catégorie de produits, chacune de ces pages pointant à son tour vers les différents produits vendus, et ces pages produits étant en général reliées entre elles pour des raisons de produits analogues, ou de même prix, etc. les groupes de pages créés recouvriront sensiblement les gammes de produits vendus.

Dans une étape E3, chaque groupe *G1, G2,..., Gp,* (puis par exemple au sein de *Gl* les sous groupes *Gi'1, Gi'2,...Gi'pi,* etc.) est associé à une " pièce " d'un univers tridimensionnel, ladite pièce devant comporter *pi* zones de liens à créer (qu'on appellera désormais des portes) vers les *pi* sous groupes de connexité de *Gi,* et vers les groupes de même niveau auxquels le groupe *Gi* est relié.

A l'issue de cette étape E3, on a réalisé une liste de pièces devant chacune comporter un certain nombre de portes *PgiGj* (porte vers un groupe de même niveau) ou *PgiGl'j* (porte vers un sous-groupes) vers d'autres pièces identifiées.

Dans une étape E4, on affecte à chaque pièce une forme et une texture visuelle, choisies dans une bibliothèque de telles formes et textures.

Dans une étape suivante E5, on choisit de même la forme et la texture visuelle des portes à créer entre les pièces selon le nombre de liens à créer. On choisit par principe d'utiliser un même style de porte pour les liens vers les sous-groupe *Gi'1, Gi'2,...Gi'pl* correspondant au groupe de la pièce, et d'utiliser un style de porte différent pour les liens vers les autres groupes de même niveau que le groupe *Gi* correspondant à la pièce, auxquels celui-ci est relié. Par exemple, on peut utiliser une figuration en porte d'ascenseur pour les liens vers les autres groupes de même niveau, et une figuration en forme de porte classique ou sous forme de renfoncement ou de niche (ou de présentoir) pour les liens vers les sous-groupes *Gi'* de pages.

Dans une étape suivante E6, on crée un habillage de l'espace tridimensionnel ainsi réalisé, par ajout d'éléments visuels servant de repères et de différenciations des pièces pour un visiteur. On créé dans la même étape un habillage en éclairage des pièces.

Dans une étape suivante E7, on détermine des points de vue dans chaque pièce, d'où toutes les portes sont simultanément visibles, lesdites portes étant déplacées si nécessaire à cette étape.

Une image 2D de la chaque scène est alors réalisée dans une étape E8. Chaque telle scène correspond, comme on le comprend, à une page hypettexte.

Dans une étape E9, les zones de l'image correspondant aux portes sont attachées à des liens hypertexte menant chacun aux pièces associées dans l'étape E3.

Dans une variante de génération des groupes de connexité *G*, on exclue initialement les pages qui pointent vers la quasi totalité des autres pages, ou, selon une variante analogue, les pages vers lesquelles pointent sensiblement la totalité des autres pages.

La portée de la présente invention ne se limite pas aux détails des formes de réalisation ci-dessus considérées à titre d'exemple, mais s'étend au contraire aux modifications à la portée de l'homme de l'art. Par exemple, on peut choisir de travailler uniquement sur la zone de texte (zone 4 dans la figure 1), en faisant abstraction des zones de bandeau 2 et de menu latéral 3. Ces zones seront en effet en général inchangées d'une page à l'autre, et il est possible de façon connue de l'homme de l'art, de les ajouter à la fin de la création des images 2D, autour desdites images.

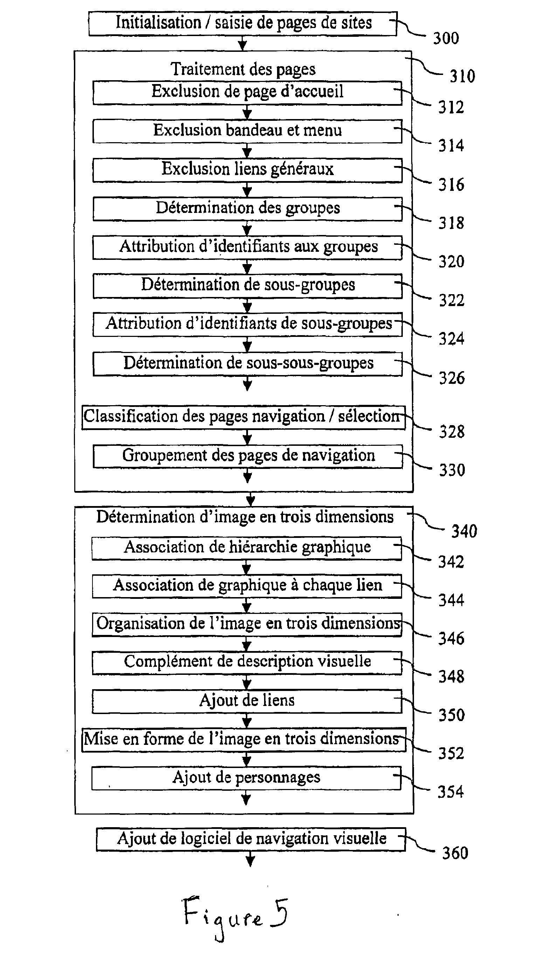

La figure 5 est un organigramme d'un procédé conforme à l'invention. On observe, en figure 5, une étape 300 d'initialisation et de saisie de site au cours de laquelle le dispositif conforme à la présente invention, par exemple un ordinateur, ou un serveur, muni d'un logiciel mettant en oeuvre la présente invention, est initialisé pour traiter des données d'au moins un site. Au cours de la même étape 300, les données d'un site, par exemple un ensemble de fichiers de description de pages (par exemple en langage HTML) et de fichiers susceptibles d'être utilisés pour afficher des pages de site, par exemple images (par exemple au format JPEG ou GIF), son (par exempte au format wave), vidéo (par exemple au format MPEG) sont rendus accessibles au dispositif et au logiciel mettant en oeuvre la présente invention. On observe que, pour être accessibles, il suffit qu'un chemin d'accès soit accessible, par exemple sur un réseau ou dans l'arborescence des répertoires conservés en mémoire du dispositif. On observe que plus d'un site (considéré comme étant l'ensemble des pages ayant, ou étant destinées à avoir, pour adresse sur le réseau Internet comportant le même nom de domaine) peut être traité dans la suite des étapes illustrées en figure 5, notamment lorsque plusieurs serveurs sont utilisés pour rendre le site accessible. Par exemple, des pages correspondant à des noms de domaine comme www.nomdedomaine1.com, www1.nomdedomaine2.com, www.nomdedomaine1.fr et nomdedomaine.fr peuvent être traités simultanément. De même, l'ensemble des sites d'une galerie marchande en ligne peut être traité en une seule fois. Pour des raisons de clarté, dans la suite de la description, on ne considère cependant qu'un seul site.

Conformément à un aspect de la présente invention et selon des modes de réalisation exemplaires, au cours d'une étape 310 comportant les étapes 312 à 330, les pages du site sont traitées pour attribuer à chaque page, un groupe, éventuellement un sous-groupe du groupe, et, éventuellement un sous-sous-groupe du sous-groupe selon les règles suivantes :

On considère initialement l'ensemble de tous les liens entre des pages du site, c'est-à-dire qu'on ne considère pas les liens d'une page qui mènent à une partie de la même page. En revanche, on considère initialement les liens pouvant être sélectionnés par l'intermédiaire d'un programme, par exemple connu sous le nom de "javascript".

Ainsi, au cours d'une étape 312, on exclue du traitement la page d'accueil du site, généralement notée "index", "accueil" ou "home", notamment en excluant de l'ensemble des liens considérés, les liens depuis ou vers la page d'accueil.

Au cours d'une étape 314, on exclue le bandeau supérieur et le menu latéral de la page d'accueil, notamment en excluant de l'ensemble des liens considérés, les liens dont l'origine est dans le bandeau supérieur ou le menu latéral lorsque, dans une page, ce bandeau supérieur et ce menu latéral sont reproduits.

Au cours d'une étape 316, on exclue, dans chaque page du site, les liens de la page d'accueil qui se retrouvent dans une proportion des pages supérieure à une proportion prédéterminée (par exemple la moitié) des pages du site, notamment en excluant de l'ensemble des liens considérés, les liens en question.

Dans des modes de réalisation exemplaires, ou variantes, on n'effectue qu'une partie des exclusions indiquées en regard des étapes 310 à 316, y compris l'exclusion des liens internes à une page.

Au cours d'une étape 318, on détermine les groupes de pages, en fonction des liens restant après exclusion, de la manière suivante :
- chaque ensemble de pages qui n'a pas de liens avec des pages en dehors dudit ensemble forme un groupe,
- parmi les pages restantes, chaque ensemble de pages qui n'a qu'un lien en dehors dudit ensemble, ce lien menant vers la page d'accueil, forme un groupe,
- parmi les pages restantes, chaque ensemble de page qui n'a qu'un lien avec des pages en dehors dudit ensemble, forme un groupe,
- parmi les pages restantes, chaque ensemble de page qui n'a que deux liens avec des pages en dehors dudit ensemble, forme un groupe,
- parmi les pages restantes, chaque ensemble de page qui n'a que trois liens avec des pages en dehors dudit ensemble, forme un groupe,
et ainsi de suite jusqu'à ce qu'il ne reste plus de page en dehors des groupes.

En variante, on utilise la méthode exposée en regard des figures 1 à 4.

En variante, on part des pages vers lesquels pointe un lien ayant sont origine dans la page d'accueil (tous les liens de la page d'accueil étant alors considérés, y compris les liens de bandeau, de menu latéral, communs à un grand nombre de pages, ...) et on constitue, à partir de chacune de ces pages, un groupe en minimisant le nombre de liens entre groupes (seuls étant considérés les liens restant après les exclusions exposées ci-dessus en regard de l'étape 310).

Au cours de l'étape 320, on attribue, à chaque groupe, un identifiant de groupe constitué de :
- chaque objet du bandeau ou du menu latéral de la page d'accueil qui correspond à un lien vers une page dudit groupe,
- à défaut, chaque objet de la page d'accueil qui correspond à un lien vers une page dudit groupe,
- à défaut, l'objet des pages du site qui correspond le plus souvent à un lien vers une page dudit groupe,
- à défaut, les objets du site qui correspondent le plus souvent à un lien vers une page dudit groupe.

On note que l'objet qui correspond à un lien peut être un ou plusieurs mots, un icône, une image, une image, une séquence vidéo, tout autre forme pouvant être représentée sur une page ou une combinaison de ces éléments.

Au cours d'une étape 322, on considère, un par un, les groupes formés au cours de l'étape 318, et on détermine des sous-groupes de la manière suivante :
- on exclue les pages accessibles directement par chaque lien correspondant à l'identifiant du groupe, que l'on appelle, dans le suite, pages d'accueil de groupe,
- on part des pages du groupe vers lesquels pointe un lien ayant sont origine dans la page d'accueil de groupe (tous les liens de la page d'accueil de groupe étant alors considérés, y compris les liens de bandeau, de menu latéral, communs à un grand nombre de pages, ...) et on constitue, à partir de chacune de ces pages, un sous-groupe en minimisant le nombre de liens entre groupes (seuls étant considérés les liens restant après les exclusions exposées ci-dessus en regard de l'étape 310).

Au cours de l'étape 324, on attribue, à chaque sous-groupe, un identifiant de sous-groupe constitué de :
- chaque objet du bandeau ou du menu latéral de la page d'accueil de groupe qui correspond à un lien vers une page dudit sous-groupe,
- à défaut, chaque objet de la page d'accueil de groupe qui correspond à un lien vers une page dudit sous-groupe,
- à défaut, l'objet des pages du groupe qui correspond le plus souvent à un lien vers une page dudit sous-groupe,
- à défaut, les objets du groupe qui correspondent le plus souvent à un lien vers une page dudit sous-groupe.

Au cours d'une étape 326, on considère, un par un, les sous-groupes formés au cours de l'étape 322, et on détermine des sous-sous-groupes de la manière suivante:
- on exclue les pages accessibles directement par chaque lien correspondant à l'identifiant du sous-groupe, que l'on appelle, dans le suite, pages d'accueil de sous-groupe,
- on part des pages du sous-groupe vers lesquels pointe un lien ayant sont origine dans la page d'accueil de sous-groupe (tous les liens de la page d'accueil de sous-groupe étant alors considérés, y compris les liens de bandeau, de menu latéral, communs à un grand nombre de pages, ,..) et on constitue, à partir de chacune de ces pages, un sous-sous-groupe en minimisant le nombre de liens entre sous-groupes (seuls étant considérés les liens restant après les exclusions exposées ci-dessus en regard de l'étape 310).

Au cours de la même étape 326, on attribue à chaque sous-sous-groupe un identifiant de la même manière que des identifiants sont attribués aux sous-groupes au cours de l'étape 324.

On observe que l'on peut arrêter ce processus itératif après la constitution des groupes, des sous-groupes, des sous-sous-groupes, ou le poursuivre un nombre de fois prédéterminé ou jusqu'à ce qu'il n'y ait plus de pages à traiter, chaque page étant alors une page d'accueil de niveau T. D'une manière générale, on définit, pour chaque page, un niveau hiérarchique "T" comme le nombre de pages d'accueils nécessaires pour définir ladite page comme une page d'accueil selon le processus décrit plus haut. Par exemple, la page d'accueil du site est une page de niveau hiérarchique "1", les pages d'accueil de groupes sont des pages de niveau hiérarchique "2", les pages d'accueil de sous-groupes sont des pages de niveau hiérarchique "3", etc.

Selon des variantes, à la place des étapes 318 à 326, au cours d'une étape 328, on classifie les pages en deux types :
- les pages de navigation et
- les pages de sélection de produit ou service.

A cet effet, on considère, pour chaque page, le ratio du nombre de liens restant à considérer sur le nombre de caractères de texte. Les pages de sélection de produit sont celles qui comportent un ratio de tels liens sur le nombre de caractères le plus bas.

En variante, on considère le nombre de liens de commande ou de panier sur le nombre de caractères de texte de la page. Les pages de sélection ont plus de panier ou commande que les pages de navigation.

En variante, on considère le ratio du nombre de liens entrant sur le nombre de liens sortant. Les pages de sélection ont plus de liens entrant que de liens sortant (faut-il exclure les pages avec un seul lien entrant, c'est-à-dire les accessoires)

Par définition, on considère la page d'accueil comme une page de navigation.

Selon des variantes mettant en oeuvre l'étape 328, au cours d'une étape 330, on classifie les seules pages de navigation en groupes, sous-groupes, etc, comme exposé en regard des étapes 318 à 326.

Selon des variantes, on pondère les liens en fonction préférentiellement décroissante du nombre de visiteurs du site qui les utilisent et on détermine les groupes, sous-groupes, etc. comme exposé ci-dessus, en fonction du poids des liens, les pages d'accueil étant déterminées en tenant compte du poids des liens vers les pages du groupe ou sous-groupe considéré, la page d'accueil du groupe ou sous-groupe étant préférentiellement celle qui est visitée en premier par les visiteurs du site, parmi les pages dudit groupe ou sous-groupe.

Selon des variantes, la pondération des liens est telle que le poids de chaque lien est proportionnel au nombre de visiteurs (ou d'acheteurs) l'utilisant au cours d'une période donnée (par exemple le dernier mois).

Selon des variantes, on considère les seuls visiteurs ayant effectué des achats sur ledit site.

On observe que le processus décrit ci-dessus peut être automatique ou semi-automatique. Par exemple, une interface de suivi de fonctionnement du logiciel peut afficher ce qui est considéré comme la page d'accueil et proposer que la page d'accueil, si elle n'est pas celle qui est affichée, soit sélectionnée manuellement par parcours dans le répertoire du site. De même pour les icônes de panier ou de commande et pour d'autres critères utilisés ci-dessus pour traiter les pages du site. De même, chaque création de groupe peut être soumise à une validation par un opérateur, en lui donnant la liste et un aperçu en petite dimension des pages du groupe considéré et en lui permettant d'inclure le groupe dans un autre groupe, d'ajouter des pages au groupe ou d'en retirer. De même pour chaque sous-groupe, sous-sous-groupe ...

Au cours d'une étape 340, comportant les étapes 342 à 352, on détermine l'image 3D associée à chaque page du site pour laquelle un niveau hiérarchique a été déterminé. A cet effet, on considère chaque page, tour à tour.

Au cours d'une étape 342, on attribue à chaque niveau hiérarchique un élément graphique selon une hiérarchie de dimensions.

Par exemple, en choisissant des éléments graphiques architecturaux, on effectue l'affectation suivante :
- niveau hiérarchique de page T=1 ou T=2 mur comportant une porte vers une pièce,
- niveau hiérarchique de niveau T=3 vitrine ou niche sur un mur d'une pièce,
- niveau hiérarchique de niveau T=4 étagère d'une vitrine ou console ou table de présentation,

On appelle ici une vitrine un meuble et non une niche comportant des portes vitrées de telle manière que la vitrine peut être visuellement séparée de tout mur. Au contraire, une niche est insérée dans un mur. De même, une étagère est considérée comme liée à un mur, à une niche ou à une vitrine alors qu'une console ou une table est considérée comme indépendante des murs, niches et vitrines.

On observe chaque niveau hiérarchique peut correspondre à plus d'un élément graphique architectural.

Au cours d'une étape 344, à chaque lien de la page considérée, en dehors des liens exclus au cours de l'étape 310, on associe un élément en suivant l'ordre suivant :
- si plusieurs liens mènent à la même page, ils sont regroupés en un seul lien,
- chaque lien vers une page d'accueil de niveau hiérarchique T=1 ou T=2 est représenté par un mur comportant une porte avec, sur la porte et/ou sur le mur, chaque identifiant du groupe considéré,
- chaque lien vers une page d'accueil de niveau hiérarchique T=3 d'un groupe déjà représenté par un mur est représenté par une niche sur le mur représentant la page d'accueil de niveau hiérarchique T=2 dudit groupe, avec, en tête de niche, chaque identifiant du sous-groupe considéré,
- chaque lien vers une page d'accueil de niveau hiérarchique T=3 d'aucun des groupes déjà représentés par un mur est représenté par une vitrine, avec, en tête de vitrine, chaque identifiant du sous-groupe considéré,
- chaque lien vers une page d'accueil de niveau T=4 d'un sous-groupe déjà représenté par un mur est représenté par une étagère sur le mur représentant la page d'accueil de niveau hiérarchique T=2 dudit groupe, avec, en bord d'étagère, chaque identifiant du sous-sous-groupe considéré,
- chaque lien vers une page d'accueil de niveau T=4 d'un sous-groupe déjà représenté par une niche ou une vitrine est représenté par une étagère de ladite niche ou de ladite vitrine représentant la page d'accueil de niveau hiérarchique T=3 dudit sous-groupe, avec, en bord d'étagère, chaque identifiant du sous-sous-groupe considéré,
- chaque lien vers une page d'accueil de niveau T=4 d'aucun des groupes ou sous-groupes déjà représentés est représenté comme un objet posé sur une table, identifié par chaque identifiant du sous-sous-groupe considéré (une seule table est utilisée pour tous les objets).

Au cours d'une étape 346, on organise l'image en fonction du nombre de murs à représenter, par exemple en considérant que les angles entre les murs successifs sont égaux ou, comme illustré en figure 2, que la moitié des murs sont représentés à gauche d'une perspective, et la moitié à droite, et dans le cas d'un nombre impair de murs, le dernier mur étant représenté en clôture de perspective. Les murs comportant le plus d'éléments (niches et étagères) sont plus larges et placés plus près du point de vue, par exemple, sur les bords latéraux de la scène. Les éléments graphiques sont placés de manière à refléter les nombres de liens entre les groupes, sous-groupes, sous-sous-groupes qu'ils représentent. Par exemple trois murs représentent trois groupes, le mur central est celui dont les pages possèdent le plus de liens avec les autres groupes représentés par des mur. Les vitrines sont placées de manière à ne pas masquer une porte, une niche ou une étagère.

Au cours d'une étape 348, on complète la description visuelle de la page par des éléments provenant de la page initiale, qui, dans l'image en trois dimensions, sont placés de manière rapprochée des identifiants correspondant aux liens représentés, c'est-à-dire sur le mur ou sur la porte, dans ou en marge de la niche ou de la vitrine, sur ou en marge de l'étagère, ou sur la table. Ces éléments textuels sont sélectionnés dans la page initiale, en relation avec chaque lien représenté. Par exemple, si le lien est basé sur une expression textuelle, celle-ci est reprise. Si le lien est associé à un icône ou une image, ceux-ci sont repris.

Selon des variantes, au cours de l'étape 348, on complète la description visuelle par l'identifiants de la page vers laquelle mène chaque lien, de manière rapprochée de l'objet de la page initiale qui portait le lien. Ainsi, une description textuelle provenant de la page initiale peut être complétée par un icône, une image,...

Le taux d'éléments ajoutés au cours de l'étape 348 dépend préférentiellement de la complexité de l'image en trois dimensions. Ainsi, pour les pages de présentation des caractéristiques des produits, qui comportent généralement peu de liens, l'ensemble du texte peut être repris.

Selon des variantes, dans le cas des liens vers des pages d'accueil de niveau T=2, si le lien est un titre de paragraphe, l'ensemble du paragraphe qui suit ce titre est repris sur le mur correspondant.

Selon des variantes, l'intégralité de la page initiale est adjointe, par exemple en dessous, à l'image en trois dimensions.

Au cours d'une étape 350, on ajoute à chaque image en trois dimensions, un texte portant un lien "ne plus afficher l'image 3D", grâce auquel, le visiteur peut choisir de recevoir des pages sans image 3D.

Au cours de l'étape 350, on ajoute à l'image en trois dimensions des liens qui n'étaient pas présents dans l'image initiale, en fonction des regroupements de pages. Par exemple, on ajoute des liens vers les pages de même niveau hiérachique qui sont liées à la même page de niveau hiérarchique supérieur (c'est-à-dire la page dont la valeur de T est juste inférieure à la valeur des dites pages, y compris la page en cours de traitement). Par exemple, si la page est une page d'accueil de sous-sous-groupe, on ajoute un lien vers chaque page d'accueil de sous-sous-groupe du même sous-groupe que ladite page. Chaque lien est représenté par l'identifiant de la page vers laquelle il mène.

Au cours d'une étape 352 de mise en forme, on effectue les étapes E6 à E8 exposées en regard de la figure 3.

Au cours d'une étape 354, on ajoute une représentation visuelle d'au moins un visiteur, soit en déplacement et franchissant une porte, en arrêt devant la table, une vitrine, une niche ou une étagère et représente le flux moyen de visiteurs (ou d'acheteurs, si seuls ceux-la sont considérés) passant par la page considérée. Plusieurs visiteurs ou une succession de visiteurs peut ainsi représenter, de manière statistique, les différents choix faits par les précédents visiteurs (ou acheteurs). Dans la description de la page, par exemple en langage HTML, le personnage peut être constitué, par exemple, par une animation flash, par un javascript ou, de manière statique, par un graphisme ou une image, de la même manière que les images insérées dans une page de manière connue.

Selon des variantes, on traite aussi, au cours de l'étape 340, les liens placés dans le menu latéral et le bandeau mais en les plaçant latéralement hors du champs de vision initial de l'utilisateur, celui-ci utilisant un moyen de pointage, par exemple une souris, pour faire tourner son champs de vision.

Selon des variantes, on ajoute des personnages pour représenter des liens particuliers. Par exemple, un vendeur en costume représente l'accès à l'aide, au plan du site, aux conditions générales de vente, aux conseils et aux liens vers des sites tiers. Par exemple, le vendeur est en costume de groom et porte un panonceau affichant les liens correspondant aux pages en question. Selon des variantes, ces fonctions sont représentées par un téléphone mural. En variantes, la sélection du vendeur ou du téléphone permet de rentrer en communication téléphonique avec un télévendeur du site marchand.

Selon des variantes, en bas d'image en trois dimensions est représenté le panier du visiteur et son contenu, sous forme d'icônes représentant les produits ou services déjà sélectionnés par le visiteur.

On observe que les icônes de panier et de commande peuvent être remplacés par des images de chariot et de caisse, respectivement.

Au cours d'une étape 360, on fait correspondre à l'image en trois dimensions, un logiciel de navigation visuelle, par exemple, sous la forme d'un "javascript", pour que le déplacement de la souris latéralement permettent la visualisation latérale de la scène représentée en trois dimensions et que un clic vers un élément architectural ou le déplacement de la molette (roue supérieure sur une souris) permette de s'approcher d'un élément de la scène et d'en visualiser les détails et les éléments de la page initiale qui lui correspondent. De tels logiciels de navigation visuelle sont connus dans le domaine des jeux.

On observe que le processus décrit ci-dessus peut être automatique ou semi-automatique. Par exemple, une interface de suivi de fonctionnement du logiciel peut afficher ce qui est considéré comme un mur, une niche, une vitrine, une étagère, une console ou une objet sur une table, et solliciter une validation par un opérateur, en lui permettant d'inclure un élément dans un autre, ou d'en changer la représentation.

Selon des variantes, on crée une nouvelle page de plan du site, accessible depuis au moins la page d'accueil du site, le plan représentant chaque groupe par une pièce et chaque sous-groupe par un mur d'une pièce. En variante, le plan représente chaque groupe par un bâtiment et chaque sous-groupe par une pièce de bâtiment.

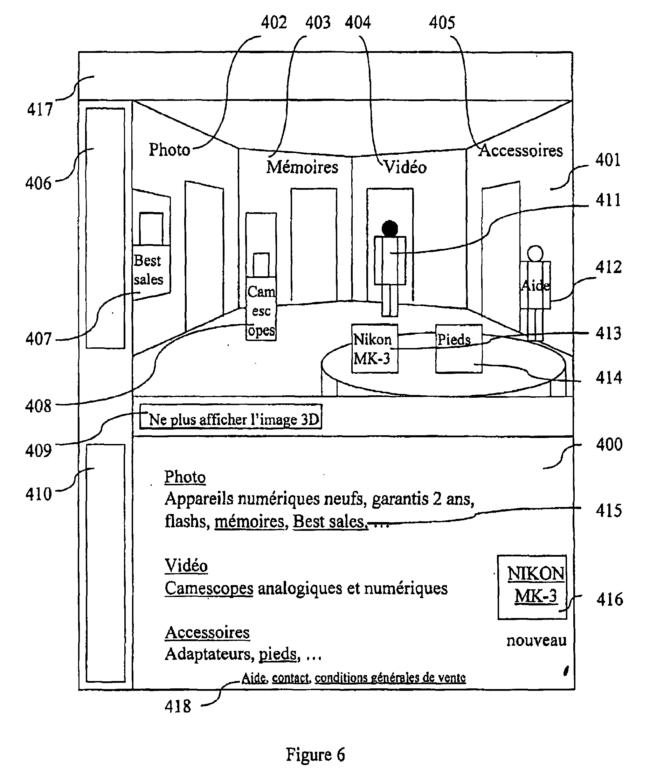

On observe en figure 6, une page constituée par la mise en oeuvre du procédé illustré en figure 5. La page comporte le bandeau supérieur 417 de la page initiale, qui est maintenu en bandeau supérieur dans la page transformée par mise en oeuvre de la présente invention. Le reste 400 de la page initiale et le menu latéral 410 sont préférentiellement et optionnellement placés en bas de page, y compris les liens hypertextes portés par des caractères alphanumériques, qui sont ici soulignés, comme le lien 415 porté par les mots "best sales" et les liens généraux 418 portés par les mots "aide", "contact", "conditions générales de ventes", et les liens portés par d'autres éléments de la page initiale, par exemple le lien 416 porté par une image représentée par un rectangle.

L'image en trois dimensions 401 comporte, pour chaque lien de la page initiale, en dehors du bandeau supérieur et du menu latéral 410, un élément graphique architectural ou de décoration d'intérieur, hiérarchisé et organisé en fonction des destinations des liens en question.

On suppose ici que les liens portés par les mots "photo", "mémoires", "vidéo" et "accessoires" ont pour destination des pages d'accueil de groupe ou la page d'accueil du site. Ils sont donc associés à des murs 402, 403, 404 et 405, respectivement. On suppose que le lien porté par les mots "best sales" a pour destination une page d'accueil de sous-groupe du groupe auquel le lien "photo" mène. Il est donc représenté sous la forme d'une niche 407 dans le mur "photo" 402. On suppose que le lien porté par les mots "camescopes" a pour destination une page d'accueil de sous-groupe d'aucun des groupes correspondant aux quatre murs. Il est donc représenté par une vitrine écartée de ces murs. On suppose que les liens portés par le mot "pieds", d'une part, et par l'image 416, d'autre part, mène à des pages d'accueil de sous-sous-groupe d'aucun des groupes ou sous-groupes représentés. Ils sont donc représentés par des objets 413 et 414 posés sur une table.

On observe que les identifiants de groupe, sous-groupe et sous-sous-groupe, qui sont supposés être ici les éléments qui portent les liens de la page initiale, sont portés par les éléments graphiques correspondants.

Un visiteur "moyen" 411 est représenté devant la porte du mur "vidéo" 404 pour indiquer que le lien le plus utilisé par les visiteurs (ou les acheteurs si on se limite à ces catégorie de visiteurs) est le lien "vidéo".

Un lien "ne plus afficher l'image 3D" 409 permet à l'utilisateur de sélectionner s'il désire recevoir les pages initiales du site ou les pages comportant les images en trois dimensions obtenues par la mise en oeuvre du procédé objet de la présente invention.

Un personnage 412 représente tous les liens généraux 418, présents sur plus qu'une certaines proportion (par exemple la moitié) des pages du site, hormis le bandeau et le menu latéral. Le personnage 412 porte un lien vers un menu donnant accès à chacun des liens généraux.

Bien entendu, la présente invention ne se limite pas aux éléments architecturaux ou décoratifs mais concerne toute hiérarchie d'éléments graphiques dont chaque élément peut être associé à un niveau hiérarchique dans un ordonnancement des pages du site.

Par exemple, des hiérarchies d'éléments graphiques conformes à la présente invention sont (par ordre hiérarchique décroissant) :
- ville, quartier, pâté de maisons, bâtiment, porte d'accès au bâtiment, étage, pièce, mur,...
- jardin, plante ou arbre, branche, feuille, ...
- galaxie, système solaire, planètes, continents, pays, régions, ville, ...
- personnage, tête-thorax-abdomen-membre, muscles,
- dispositif électronique (par exemple ordinateur), périphériques, sous-systèmes, composants, ...

## Revendications

1. Procédé de transformation d'une description d'une première page informatique hypertexte représentée par une première liste d'instructions, par exemple en langage HTML, la première page comportant au moins un lien hypertexte, en une seconde page informatique représentée par une seconde liste d'instructions, par exemple en langage HTML représentant une seconde page hypertexte, **caractérisé en ce qu'**il comporte une étape de constitution d'une image en trois dimensions, dont au moins une partie comporte un lien hypertexte de la première page.

2. Procédé selon la revendication 1, **caractérisé en ce qu'**il comporte une étape de hiérarchisation des liens de la première page informatique, chaque niveau hiérarchique de lien étant associé à au moins un élément graphique dans une hiérarchie d'éléments graphiques.

3. Procédé selon la revendication 2, **caractérisé en ce que** les éléments graphiques de la hiérarchie d'éléments graphiques possèdent des dimensions physiques en décroissantes.

4. Procédé selon l'une quelconque des revendications 2 ou 3, **caractérisé en ce que** l'étape de hiérarchisation comporte une étape de traitement de liens de pages d'un site dont fait partie ladite première page.

5. Procédé selon la revendication 4, **caractérisé en ce qu'**il comporte une étape de création de sous-ensembles de pages Internet de manière à ce que les nombres de liens entre ces groupes *G1, G2, ..., Gp* de pages connexes soient minimisés.

6. Procédé selon la revendication 5, **caractérisé en ce que** l'étape de hiérarchisation comporte une étape d'association à chaque groupe *G1*, *G2, ..., Gp,* (puis par exemple au sein de *Gi* les sous groupes *Gi'1, Gi'2,.. Gi'pi,* etc.) d'un élément graphique comportant *pi* zones de liens à créer vers les *pi* sous groupes de connexité de *Gi*, et vers les groupes de même niveau auxquels le groupe *Gi* est relié.

7. Procédé selon l'une quelconque des revendications 4 à 6, **caractérisé en ce qu'**il comporte une étape d'exclusion de liens préliminaire à ladite hiérarchisation.

8. Procédé selon l'une quelconque des revendications 4 à 7, **caractérisé en ce que** l'étape de hiérarchisation comporte une étape d'analyse de flux de visiteurs.

9. Procédé selon l'une quelconque des revendications 1 à 7, **caractérisé en ce que** l'étape de constitution d'une image en trois dimensions comporte une étape d'ajout, dans l'image en trois dimensions, d'au moins un lien absent de la première page informatique.

10. Procédé selon l'une quelconque des revendications 1 à 9, **caractérisé en ce que** l'étape de constitution d'une image en trois dimensions comporte une étape de mise en relation des éléments graphiques en fonction des relations entre les liens qu'ils représentent.
